Europäisches Patentamt

European Patent Office

Office européen des brevets

(19)

(11) Veröffentlichungsnummer: **0 368 021 B1**

# EUROPÄISCHE PATENTSCHRIFT

(12)

(45) Veröffentlichungstag der Patentschrift :
08.01.92 Patentblatt 92/02

(51) Int. Cl.⁵ : **E01H 1/05, A01D 43/02**

(21) Anmeldenummer : **89118937.5**

(22) Anmeldetag : **12.10.89**

(54) **Gerät für das Kehren von Flächen.**

(30) Priorität : **09.11.88 DE 3837939**
**21.03.89 DE 3909163**

(43) Veröffentlichungstag der Anmeldung :
**16.05.90 Patentblatt 90/20**

(45) Bekanntmachung des Hinweises auf die
Patenterteilung :
**08.01.92 Patentblatt 92/02**

(84) Benannte Vertragsstaaten :
**CH DE FR GB IT LI NL SE**

(56) Entgegenhaltungen :
**DE-A- 1 658 398**

(56) Entgegenhaltungen :
**DE-A- 3 629 746**
**DE-A- 3 707 093**
**DE-C- 89 465**
**DE-U- 8 704 846**
**FR-A- 2 229 374**
**FR-A- 2 438 965**
**GB-A- 1 588 530**

(73) Patentinhaber : **Amazonen-Werke H. Dreyer
GmbH & Co. KG
Am Amazonenwerk 9-13
W-4507 Hasbergen-Gaste (DE)**

(72) Erfinder : **Pfisterer, Thomas
Neffstrasse 6
W-6600 Saarbrücken (DE)**

EP 0 368 021 B1

## Beschreibung

Die Erfindung betrifft ein Gerät für das Kehren von Flächen gemäß Oberbegriff des Patentanspruches 1.

Ein derartiges Gerät ist durch die deutsche Offenlegungsschrift 3629746 bekannt. Das Problem bei derartigen Geräten besteht darin, daß die eingesetzten Bürstenelemente zwangsläufig einem gewissen Verschleiß unterliegen, so daß die Bürsten abnutzen. Die Bürstenelemente werden also "kürzer" ; d.h., daß der äußere Rotationsdurchmesser der Bürsten kleiner wird. Hierdurch wird zwangsläufig der Abstand zu den wirksamen Teilen der Bürstenelemente und der zu kehrenden Oberfläche sowie der Abstand zu dem Prallblech des Kehrgutförderkanals größer. Hierdurch wird einerseits das Kehrergebnis wesentlich schlechter und weiterhin aufgrund des größeren Spaltes zwischen den Bürstenelementen und dem Prallblech wird nicht mehr das gesamte Material in ausreichender Weise in der Auffangbehälter gefördert.

Nun ist bereits durch die deutsche Offenlegungsschrift 3629746 vorgeschlagen worden, den gesamten Rotor über einen Verstellmechanismus derart nachzustellen, daß der durch den Verschleiß verkleinerte Rotationsdurchmesser der äußeren Teile der Bürstenelemente ausgeglichen werden kann. Diese Art ist jedoch sehr aufwendig und teuer.

Der Erfindung liegt nun die Aufgabe zugrunde, auf einfachste Weise bei einem Gerät der eingangs geschilderten Art den durch Verschleiß der Bürstenelemente kleiner gewordenen Rotationsradius ausgleichen.

Diese Aufgabe wird erfindungsgemäß durch die kennzeichnenden Maßnahmen des Anspruches 1 gelöst.

Infolge dieser Maßnahmen ist es auf einfachste Weise möglich, die durch den Verschleiß kürzer gewordenen Bürstenelemente an anderen Halterungen anzubringen, die weiter von der Rotationsachse entfernt sind, so daß der Rotationsdurchmesser, der konstruktionsbedingt festgelegt ist, ausgeglichen werden kann. Hierdurch ergibt sich der sehr große Vorteil gegenüber dem Stand der Technik, daß auch bei kürzer gewordenen Bürstenelementen, wenn sie an weiter von der Rotationsachse entfernten Halterungen umgehängt werden, die konstruktionsbedingte Rotationsgeschwindigkeit beibehalten bleibt und gleichzeitig der Abstand zur Bodenoberfläche, die gekehrt werden soll, sowie der Abstand zum Prallblech des Kehrgutförderkanals auch optimal erhalten bleibt.

Durch die FR-OS 2229374 ist für ein Gerät zum Kehren von Flächen in einer Ausführungsform (Fig. 2) bereits vorgeschlagen worden, die Bürstenelemente in radialer Richtung mit unterschiedlichen Abständen an nach außen ragenden Halterungsstäben anzuschrauben. Diese Konstruktion ist sehr labil. Außerdem ist das Umschrauben der Bürstenelemente sehr umständlich. Das gleiche gilt für eine andere hier vorgeschlagene Ausführungsform (Fig. 3 und 4), bei der die Bürstenelemente mit ihren Halterungsstäben in verschiedenen Positionen an der Welle angeschraubt werden. Im Gegensatz hierzu werden bei dem erfindungsgemäßen Gerät die Bürstenelemente in äußerst einfacher Weise nur in die verschiedenen vorgesehenen Halterungen umgehängt.

Hierbei kann das Halterungsrohr einen ovalen Querschnitt aufweisen oder einen mehreckigen Querschnitt, der einen zusammengedrückten Vieleck ähnelt. Es ist erfindungsgemäß vorgesehen, daß ein im Querschnitt mehreckiges, vorzugsweise achteckiges Halterungsrohr vorgesehen ist, welches im Querschnitt symmetrisch ist. Auch kann das Halterungsrohr im Querschnitt achteckig sowie einer Ellipse angenähert, jedoch mit geraden Fläche, ausgebildet sein.

Um von vornherein eine Unwucht auszugleichen, ist erfindungsgemäß vorgesehen, daß jeweils an zwei gegenüberliegenden Seiten des Halterungsrohres die Bürstenelemente auf dem Halterungsrohr mittels Halterungen angebracht sind. Des weiteren ist erfindungsgemäß vorgesehen, daß auf den am weitesten von der Rotationsachse entfernten Flächen des Halterungsrohres jeweils zwei Halterungen in Umfangsrichtung gesehen nebeneinander angeordnet sind. Hierdurch wird die Voraussetzung geschaffen, daß gleichzeitig auf dem gleichen Rotor Bürstenelemente und Vertikutiermesser anzuordnen sind. Hierbei sind dann die Bürstenelemente, vorzugsweise neue Bürstenelemente an den am dichtesten zur Rotationsachse gelegenen Halterungen befestigt, während die Vertikutiermesser an den am weitesten entfernt liegenden Halterungen befestigt sind. Hierdurch wird das Aufsammeln des durch die Vertikutiermesser aus den Rasenflächen entfernten Rasen- und sonstigen Teile im Auffangbehälter gelöst, sowie eine hervorragende Abkehrung dieser eben erst aus dem Boden entfernten Teile durch die Vertikutiermesser sowie das Aufsammeln durch die Bürstenelemente gelöst.

Dadurch, daß die Bürstenelemente gegen die Messerelemente austauschbar sind, sowie auch gleichzeitig einsetzbar sind, wird eine universell einsetzbare Maschine, die getrennt oder gleichzeitig kehren und vertikutieren sowie das Mähen von Flächen durchführen kann. Selbstverständlich können an Stelle der Vertikutiermesser auch Mähmesser eingesetzt werden, in Verbindung mit den Bürstenelementen, so daß gleichzeitig beim Mähen des Rasens dieser auch gekehrt sowie das Mähgut aufgesammelt wird.

Um die Befestigung der Bürstenelemente an den Halterungen mit dem größten radialen Abstand zur Rotationsachse des Halterungsrohres wesentlich zu vereinfachen, ist in erfindungsgemäßer Weise vorgesehen, daß an der Rotationstrommel jeweils für die Messer und für die Bürstenelemente eigene Halterungen angebracht sind.

Infolge dieser Maßnahme lassen sich die einen Verschleiß unterliegenden Bürstenelemente auf einfachste Weise an den entsprechenden Halterungen in unterschiedlichen radialen Abständen zur Rotationsachse des Halterungsrohres anordnen. Die Anordnung der Bürstenelemente an den mit unterschiedlichen radialen Abständen zur Rotationsachse des Halterungsrohres angeordneten Halterungen gewährleistet, daß der Rotationsradius zwischen der Rotationsachse und der Umlaufbahn der unterschiedlich langen Bürstenelemente immer gleichbleibt. Hierdurch erfolgt das Aufsammeln des Kehrgutes bzw. des gemähten und/oder aus dem Rasen heraus vertikutierten Gutes in zufriedenstellender Weise, da der Abstand zwischen der Umlaufbahn der Bürstenelemente und dem Prallblech des Gutförderkanals sowie der Oberfläche der zu kehrenden Fläche annähernd konstant bleibt, so daß das von den Bürstenelementen aufgenommene Gut in ordnungsgemäßer Weise über den Gutförderkanal in das Innere des Sammelgutbehälters gelangt und gute Kehrarbeit der Bürstenelemente auf der Bodenoberfläche erreicht wird.

Bei einer Ausführungsform ist in erfindungsgemäßer Weise vorgesehen, daß die Messer mit Zwischengliedern an den an der Rotationstrommel angebrachten Halterungen befestigt sind, und daß diese Zwischenglieder an der Rotationstrommel verbleiben, wenn die Bürstenelemente an der Rotationstrommel angeordnet werden. Hierdurch entfällt nun in besonders vorteilhafter Weise die Demontage der Zwischenglieder, mit denen die Messer an den Halterungen der Rotationstrommel befestigt sind. Es ist nunmehr nur noch notwendig, die Messer, welche werkzeuglos an den Zwischengliedern montier- bzw. demontierbar sind, von den Zwischengliedern zu entfernen. Hiernach lassen sich dann die Bürstenelemente sehr einfach an den den Halterungen für die Messerelemente benachbarten, für die Bürstenelemente vorgesehenen Halterungen befestigen.

Weitere Einzelheiten der Erfindung sind der Beispielsbescheibung und den Zeichnungen zu entnehmen. Hierbei zeigt

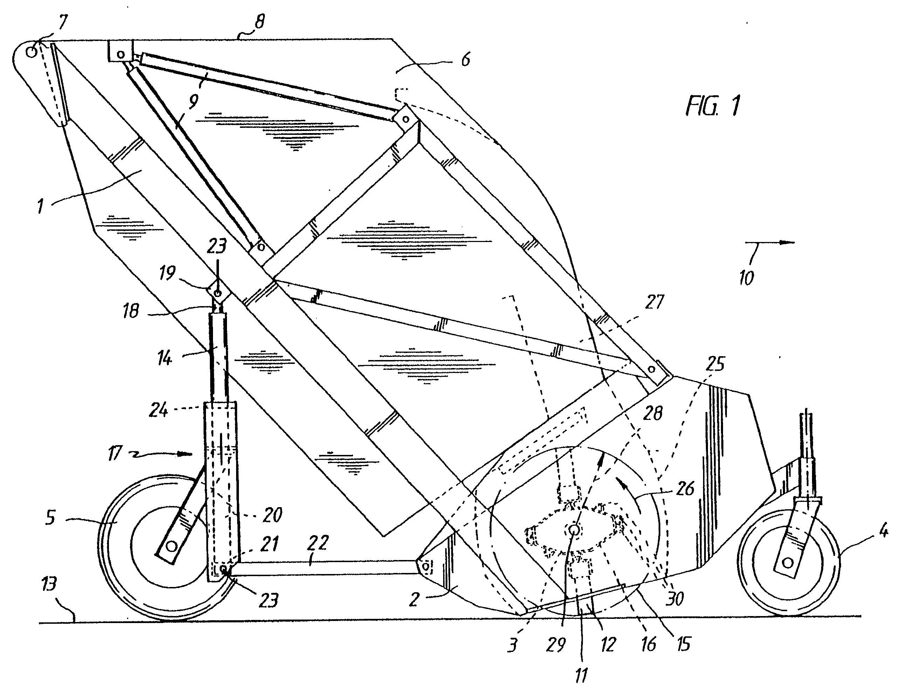

Fig. 1    das in erfindungsgemnäßer Weise ausgebildete Gerät zum Mähen, Vertikutieren und Aufsammeln von Gut in Prinzipdarstellung und in der Seitenansicht,

Fig. 2    der erfindungsgemäße Rotationskörper, wobei Bürstenelemente an dem Rotationskörper angeordnet sind, in der Seitenansicht,

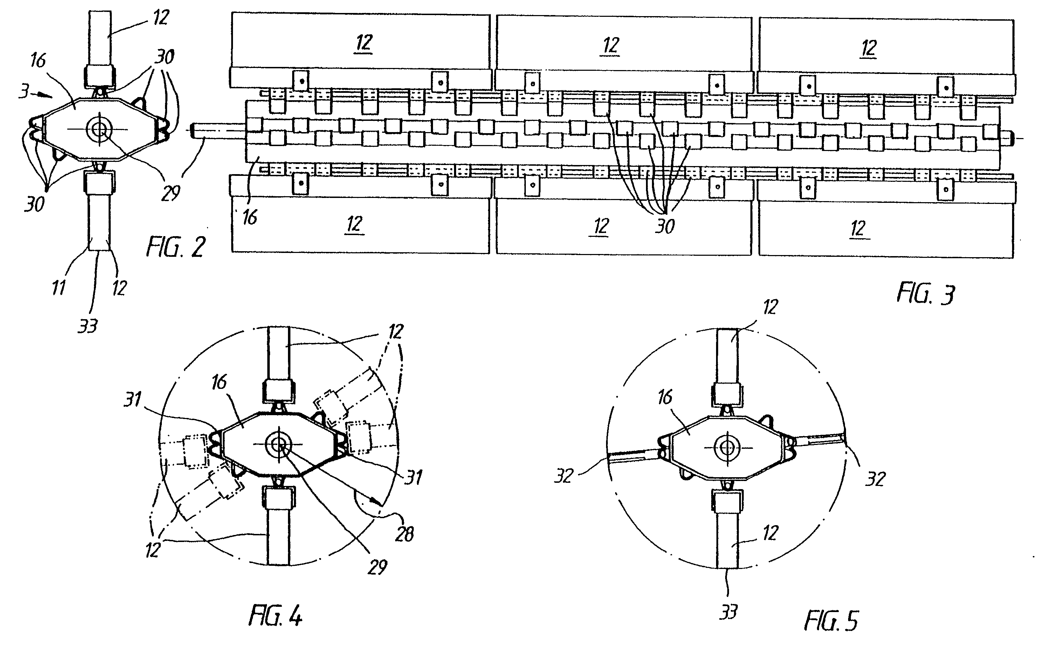

Fig. 3    der Rotationskörper gemäß Fig, 2 in der Vorderansicht,

Fig. 4    der Rotationskörper gemäß Fig. 2, wobei die abgenutzten Bürstenelemente sich in unterschiedlichen Abständen zur Rotationsachse am Rotationskörper befestigen lassen,

Fig. 5    der Rotationskörper gemäß Fig. 2, wobei zusätzlich zu den Bürstenelementen noch Vertikutiermesser am Rotationskörper befestigt sind,

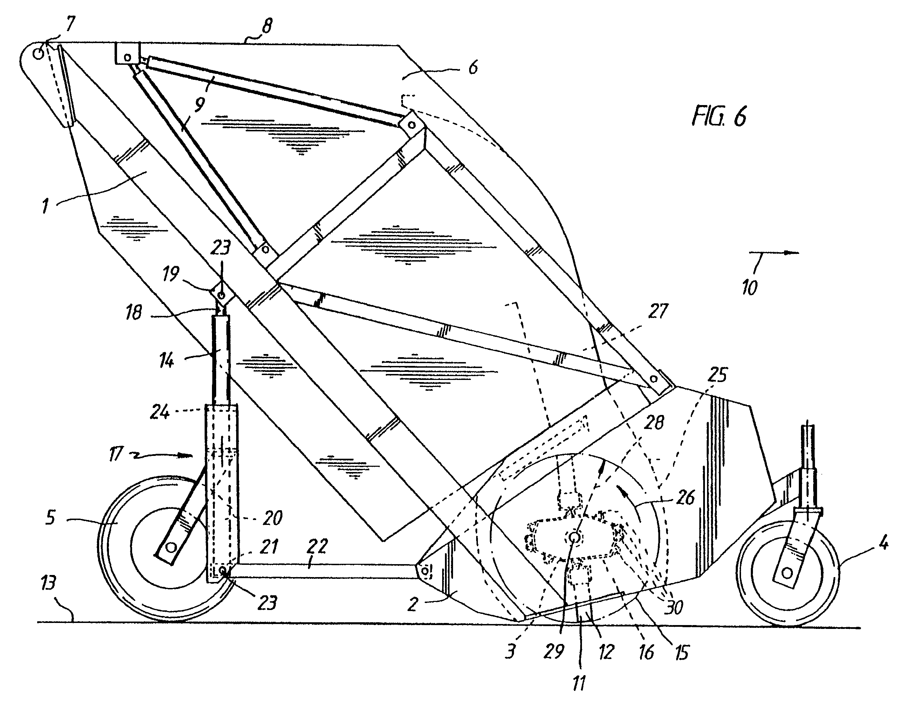

Fig. 6    das in erfindungsgemäßer Weise ausgebildete Gerät zum Mähen, Vertikutieren und Aufsammeln von Gut, in Prinzipdarstellung und in der Seitenansicht,

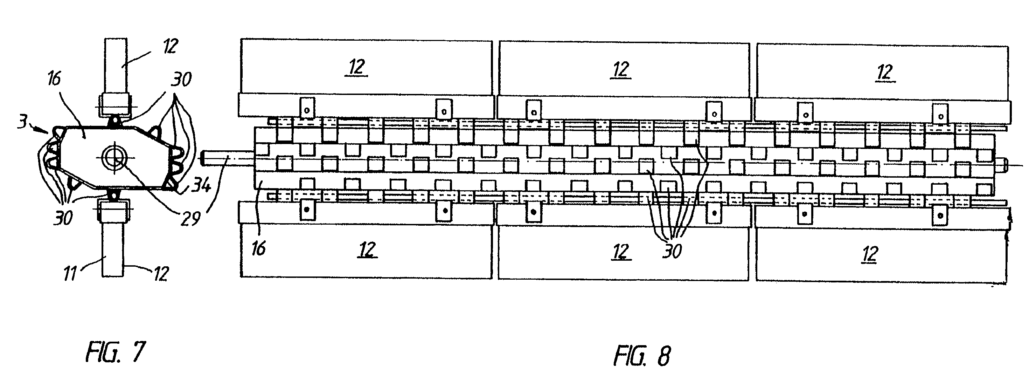

Fig. 7    der erfindungsgemäße Rotationskörper, wobei Bürstenelemente an dem Rotationskörper angeordnet sind, in der Seitenansicht,

Fig. 8    der Rotationskörper gemäß Fig. 6 in der Vorderansicht,

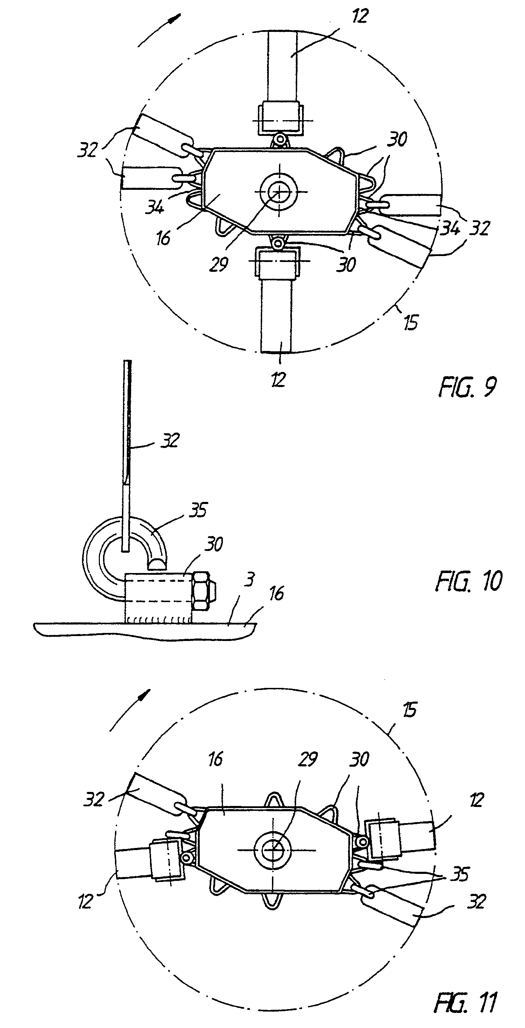

Fig. 9    der Rotationskörper gemäß Fig. 7, wobeineben den Bürstenelementen Messer an dem Rotationskörper befestigt sind,

Fig. 10    die Messerbefestigung an den Halterungen des Rotationskörpers in Teilansicht und

Fig. 11    der Rotationskörper gemäß Fig. 9, wobei die abgenutzen Bürstenelemente in den ihnen zugedachten Halterungen am Rotationskörper befestigt sind.

Das Gerät zum Kehren von Flächen weist den verfahrbaren Rahmen 1, das Antriebsgehäuse 2 mit dem Rotationskörper 3 sowie die schwenkbaren Stützräder 4 und die ebenfalls schwenkbaren Nachlaufräder 5 auf. In dem Rahmen 1 ist der Sammelgutbehälter 6 derart befestigt, daß er zum Entleeren des Sammelgutbehälters 6 um die Schwenkachse 7 verschwenkt werden kann, so daß die sich im Sammelgutbehälter 6 befindlichen Materialien über die sich im oberen Bereich des Behälters 6 befindliche Entleerungsöffnung 8 beispielsweise auf einen Anhänger überladen lassen. Dieses Verschwenken des Sammelgutbehälters 6, um die Schwenkachse 7, erfolgt durch die beiden Hydraulikzylinder 9, welche über Hydraulikleitungen 9 mit dem Hydrauliksystem des das Gerät in Fahrtrichtung 10 ziehenden Ackerschleppers verbunden sind.

Die Einstellung der Arbeitstiefe zwischen den am Rotationskörper 3 angeordneten Arbeitswerkzeugen 11, welche beispielsweise als Bürstenelemente 12 ausgebildet sind, und der Bodenoberfläche 13 erfolgt mittels des Hydraulikzylinders 14. Dieses als Hydraulikzylinder 14 ausgebildete Einstellelement zur Einstellung der Arbeitstiefe, d.h., dem Abstand der Umlaufbahn 15 der an dem Rotationskörper 3, welcher als Halterungsrohr 16 ausgebildet ist, angeordneten Bürstenelemente 12 und der Bodenoberfläche 13, ist zwischen dem Rahmen 1 des Gerätes und den schwenkbaren Nachlaufrädern 5 angeordnet, wobei die Nachlaufräder 5 wiederum an den schwenkbaren Lenkerrahmen 17 befestigt sind. Der Hydraulikzylinder 14 ist auf der Seite des Arbeitskolbens 18 an der am Rahmen 1 befestigten Halterung 19 schwenkbar gelagert, wobei der Zylinder 20 des Hydraulikzylinders 14 über die Halterung 21 an dem schwenkbaren Lenkerrahmen 17 gelagert ist. Über die Strebe 22 ist der schwenkbare Lenkerrahmen 17 mit dem Antriebsgehäuse 2 für den Rotationskörper 3 verbunden. Die Neigung des Rahmens 1 gegenüber der Bodenoberfläche 13, d.h. die Arbeitstiefe der Arbeitswerkzeuge 11, läßt sich mittels des Hydraulikzylinders 14 einstellen, der die Führung des schwenkbaren Lenkerrahmens derart übernimmt, daß der Lenkerrahmen 17 um quer zur Fahrtrichtung 10 liegende Achsen 23 und nicht gegenüber dem Hydraulikzylinder 14 verschwenkt wird. Hierzu ist zwischen dem schwenkbaren Lenkerrahmen 17 und dem Hydraulikzylinder 14 jeweils das Führungselement 24 angeordnet. Ein derartiger, zur Einstellung der Arbeitstiefe zwischen dem Lenkerrahmen 17 und dem Rahmen des Gerätes 1 angeordneter Hydraulikzylinder 14 befindet sich im jeweiligen äußeren Bereich des Gerätes. Des weiteren läßt sich durch Veränderung der Neigung des Rahmens 1 gegenüber der Bodenoberfläche 13 die Höhe zwischen der Bodenoberfläche 13 und der Schwenkachse 7 variieren, wobei sich dieser Abstand bei ausgefahrenem Hydraulikzylinder 14 vergrößert und die Entladungshöhe beim Entleeren des Behälters 6 somit auch erhöht wird, so daß das im Sammelgutbehälter 6 aufgenommene Gut auch auf Anhänger mit hoher Ladefläche umgefüllt werden kann.

Damit nun das Aufsammeln des Kehrgutes bzw. des Gemähten und/oder aus dem Rasen herausvertikutieren Gutes in zufriedenstellender Weise erfolgt, ist es wichtig, daß der Abstand zwischen der Umlaufbahn 15 der als Bürstenelemente 12 ausgebildeten, am Rotationskörper 3 angeordneten Arbeitswerkzeuge 11 und dem Prallblech 25 einen annähernd konstanten Abstand zueinander aufweist. Dieses ist notwendig, damit ein exaktes Aufsammeln des Materials, mittels der am Rotationskörper 3 angeordneten Arbeitswerkzeuge 11, wobei der Rotationskörper 3 in Rotationsrichtung 26 angetrieben wird, und das aufzunehmende Gut über den Gutförderkanal 27 in den Sammelgutbehälter 6 gelangt, gewährleistet ist. Da die Bürstenelemente 12 einem Verschleiß unterliegen, so daß sich der Rotationsradius 28 der Umlaufbahnen 15 der Bürstenelemente 12 verkleinert, weist das Halterungsrohr 16 einen unrunden Querschnitt auf, so daß am Umfang des Halterungsrohres 16 mit unterschiedlichen radialen Abständen zur Rotationsachse 29 des Halterungsrohres 16, die Halterungen 30 für die Arbeitswerkzeuge 11, welche als Bürstenelemente 12 ausgebildet sein können, angebracht sind. Die Bürstenelemente 12 werden jeweils an zwei gegenüberliegenden Seiten des Halterungsrohres 16 mittels der Halterungen 30 an dem Halterungsrohr 16 befestigt.

Die Fig. 4 zeigt die Anordnung der bedingt durch Verschleiß unterschiedlich langen Bürstenelemente 12 an den jeweiligen Halterungen 30 des Halterungsrohres 16. Dadurch, daß die Halterungen 30 für die Bürstenelemente 12 in unterschiedlichen radialen Abständen zur Rotationsachse 29 am Umfang des Halterungsrohres 16 angeordnet sind, wird gewährleistet, daß der Rotationsradius 28 zwischen der Rotationsachse 29 und der Umlaufbahn 15 langen der Bürstenelemente 12 immer gleichbleibt. Durch die Anordnung der durch Verschleiß kürzer gewordenen Bürstenelemente 12 in verschiedenen radialen Abständen zur Rotationsachse 29 des Halterungsrohres 16 wird gewährleistet, daß der Abstand zwischen der Umlaufbahn 15 der Bürstenelemente 12 und dem Prallblech 25 des Gutförderkanals 27 annähernd konstant bleibt, so daß das von den Bürstenelementen 12 aufgenommene Gut in ordnungsgemäßer Weise über den Gutförderkanal 27 in das Innere des Sammelgutbehälters 6 gelangt und gute Kehrarbeit der Bürstenelemente 12 auf der Bodenoberfläche 13 erreicht wird.

Auf den am weitesten von der Rotationsachse 29 entfernten Flächen 31 des Halterungsrohres 16 sind jeweils zwei Halterungen 30 in Umfangsrichtung des Halterungsrohres 16 gesehen nebeneinander angeordnet. In diesen am weitesten von der Rotationsachse 29 entfernten, auf den Flächen 31 angeordneten Halterungen 30 lassen sich auch Mäh- und/oder Vertikutiermesser 32 befestigen.

Die Fig. 5 zeigt die gleichzeitige Anordnung von Vertikutiermessern 32 und Bürstenelementen 12 am Halterungsrohr 16 des Rotationskörpers 3. Hierbei sind die Bürstenelemente 12 an den dichter zur Rotationsachse 29 angebrachten Halterungen 30 angeordnet, während die Messer 32 an den weiter von der Rotationsachse 29 des Rotationskörpers 3 angebrachten Halterungen 30 befestigt sind. Sind die Bürstenelemente 12 verschlissen, so daß ihre äußere Kante 33 einen zu großen Abstand zum vorgeschriebenen Rotationsradius 28 der Umlaufbahnen 15 aufweist, lassen sich entsprechend der Fig. 4 an den anderen Halterungen 30, welche einen größeren Abstand zur Rotationsachse 29 des Rotationskörpers 3 aufweisen, anordnen. Hierbei ist es dann auch möglich, das Mäh- und/oder Vertikutiermesser 32 und die Bürstenelemente 12 an den Halterungen 30 zu befestigen, welche auf den Flächen 31 des Rotationskörpers 3 angeordnet sind.

Durch die zusätzliche Anordnung von Bürstenelementen 12 am mit Mäh- und/oder Vertikutiermessern 32 bestückten Halterungsrohr 16 des Rotationskörpers 3 wird ein exaktes Aufsammeln des gemähten bzw. aus dem Rasen herausvertikutierten Gutes in exakter Weise gewährleistet.

Das Gerät zum Kehren von Flächen und/oder zum Mähen bzw. zum Vertikutieren von Rasenflächen Fig. 6 weist ebenfalls den verfahrbaren Rahmen 1, das Antriebsgehäuse 2 mit dem Rotationskörper 3 sowie die schwenkbaren Stützräder 4 und die ebenfalls schwenkbaren Nachlaufräder 5 auf. In dem Rahmen 1 ist der Sammelgutbehälter 6 derart befestigt, daß er zum Entleeren des Sammelgutbehälters 6 um die Schwenkachse

EP 0 368 021 B1

7 verschwenkt werden kann, so daß die sich im Sammelgutbehälter 6 befindlichen Materialien über die sich im oberen Bereich des Behälters 6 befindliche Entleerungsöffnung 8 beispielsweise auf einen Anhänger überladen lassen. Dieses Verschwenken des Sammelgutbehälters 6, um die Schwenkachse 7, erfolgt durch die beiden Hydraulikzylinder 9, welche über Hydraulikleitungen mit dem Hydrauliksystem des das Gerät in Fahrtrichtung 10 ziehenden Ackerschleppers verbunden sind.

Die Einstellung der Arbeitstiefe zwischen den am Rotationskörper 3 angeordneten Arbeitswerkzeugen 11, welche beispielsweise als Bürstenelemente 12 ausgebildet sind, und der Bodenoberfläche 13 erfolgt mittels des Hydraulikzylinders 14. Dieses als Hydraulikzylinder 14 ausgebildete Einstellelement zur Einstellung der Arbeitstiefe, d.h., dem Abstand der Umlaufbahn 15 der an dem Rotationskörper 3, welcher als Halterungsrohr 16 ausgebildet ist, angeordneten Bürstenelemente 12 und der Bodenoberfläche 13, ist zwischen dem Rahmen 1 des Gerätes und den schwenkbaren Nachlaufrädern 5 angeordnet, wobei die Nachlaufräder 5 wiederum an den schwenkbaren Lenkerrahmen 17 befestigt sind. Der Hydraulikzylinder 14 ist auf der Seite des Arbeitskolbens 18 an der am Rahmen 1 befestigten Halterung 19 schwenkbar gelagert, wobei der Zylinder 20 des Hydraulikzylinders 14 über die Halterung 21 an dem schwenkbaren Lenkerrahmen 17 gelagert ist. Über die Strebe 22 ist der schwenkbare Lenkerrahmen 17 mit dem Antriebsgehäuse 2 für den Rotationskörper 3 verbunden. Die Neigung des Rahmens 1 gegenüber der Bodenoberfläche 13, d.h. die Arbeitstiefe der Arbeitswerkzeuge 11, läßt sich mittels des Hydraulikzylinders 14 einstellen, der die Führung des schwenkbaren Lenkerrahmens derart übernimmt, daß der Lenkerrahmen 17 um quer zur Fahrtrichtung 10 liegende Achsen 23 und nicht gegenüber dem Hydraulikzylinder 14 verschwenkt wird. Hierzu ist zwischen dem schwenkbaren Lenkerrahmen 17 und dem Hydraulikzylinder 14 jeweils das Führungselement 24 angeordnet. Ein derartiger, zur Einstellung der Arbeitstiefe zwischen dem Lenkerrahmen 17 und dem Rahmen des Gerätes 1 angeordneter Hydraulikzylinder 14 befindet sich im jeweiligen äußeren Bereich des Gerätes. Des weiteren läßt sich durch Veränderung der Neigung des Rahmens 1 gegenüber der Bodenoberfläche 13 die Höhe zwischen der Bodenoberfläche 13 und der Schwenkachse 7 variieren, wobei sich dieser Abstand bei ausgefahrenem Hydraulikzylinder 14 vergrößert und die Entladungshöhe beim Entleeren des Behälters 6 somit auch erhöht wird, so daß das im Sammelgutbehälter 6 aufgenommene Gut auch auf Anhänger mit hoher Ladefläche umgefüllt werden kann.

Damit nun das Aufsammeln des Kehrgutes bzw. des gemähten und/oder aus dem Rasen herausvertikutieren Gutes in zufriedenstellender Weise erfolgt, ist es wichtig, daß der Abstand zwischen der Umlaufbahn 15 der als Bürstenelemente 12 ausgebildeten, am Rotationskörper 3 angeordneten Arbeitswerkzeuge 11 und dem Prallblech 25 einen annähernd konstanten Abstand zueinander aufweist. Dieses ist notwendig, damit ein exaktes Aufsammeln des Materials, mittels der am Rotationskörper 3 angeordneten Arbeitswerkzeuge 11, wobei der Rotationskörper 3 in Rotationsrichtung 26 angetrieben wird, und das aufzunehmende Gut über den Gutförderkanal 27 in den Sammelgutbehälter 6 gelangt, gewährleistet ist. Da die Bürstenelemente 12 einem Verschleiß unterliegen, so daß sich der Rotationsradius 28 der Umlaufbahnen 15 der Bürstenelemente 12 verkleinert, weist das Halterungsrohr 16 einen unrunden Querschnitt auf, so daß am Umfang des Halterungsrohres 16 mit unterschiedlichen radialen Abständen zur Rotationsachse 29 des Halterungsrohres 16, die Halterungen 30 für die Arbeitswerkzeuge 11, welche als Bürstenelemente 12 ausgebildet sein können, angebracht sind. Die Bürstenelemente 12 werden jeweils an zwei gegenüberliegenden Seiten des Halterungsrohres 16 mittels der Halterungen 30 an dem Halterungsrohr 16 befestigt.

Die Fig. 9 zeigt die Anordnung von zusätzlichen Vertikutiermessern 32 neben den Bürstenelementen 12 an den Halterungen 30 des Halterungsrohres 16. Die Vertikutiermesser 32 sind an den am weitesten von der Rotationsachse 29 entfernten Flächen 34 angeordnet, wobei sich auf diesen Flächen 34 des Halterungsrohres 16 jeweils drei Halterungen 30 in Umfangsrichtung des Halterungsrohres 16 gesehen nebeneinander angeordnet sind. In diesen am weitesten von der Rotationsachse 29 entfernten, auf den Flächen 34 angeordneten Halterungen 30 sind die als Mäh- und/oder Vertikutiermesser 32 ausgebildeten Arbeitswerkzeuge 11 mittels der Zwischenglieder 35 an den an dem Rotationskörper 3 angeschweißten Halterungen 30 befestigt. Diese Mäh- und/oder Vertikutiermesser 32 lassen sich werkzeuglos an den Zwischengliedern 35 montieren bzw. demontieren.

Die Fig. 11 zeigt die Anordnung von verschlissenen, kürzeren Bürstenelementen 12 an den am weitesten von der Rotationsachse 29 entfernten Halterungen 30 an dem Halterungsrohr 16. Dadurch, daß die Halterungen 30 für die Bürstenelemente 12 in unterschiedlichen radialen Abständen zur Rotationsachse 29 am Umfang des Halterungsrohres 16 angeordnet sind, wird gewährleistet, daß der Rotationsradius 28 zwischen der Rotationsachse 29 und der Umlaufbahn 15 bei unterschiedlich langen Bürstenelementen 12 immer gleichbleibt. Durch die Anordnung der durch Verschleiß kürzer gewordenen Bürstenelemente 12 in verschiedenen radialen Abständen zur Rotationsachse 29 des Halterungsrohres 16 wird gewährleistet, daß der Abstand zwischen der Umlaufbahn 15 der Bürstenelemente 12 und dem Prallblech 25 des Gutförderkanals 27 annähernd konstant bleibt, so daß das von den Bürstenelementen 12 aufgenommene Gut in ordnungsgemäßer Weise über den Gutförderkanal 27 in das Innere des Sammelgutbehälters 6 gelangt und gute Kehrarbeit der Bürstenelemente 12 auf der Bodenoberfläche 13 erreicht wird. Hierzu ist das der Halterung 30 für das jeweilige Bürstenelement 12 benachbarte Vertikutiermesser 32 von dem Zwischenglied 35 entfernt, so daß sich das Bürstenelement 12 in seiner Halterung 30 frei bewegen kann. Die Montage der Bürstenelemente 12 läßt sich so auf einfachste Weise durchführen, da nur die Mäh- und/oder Vertikutiermesser 32 der benachbarten Halterungen entfernt werden müssen, wobei die Zwischenglieder 35 an dem Halterungsrohr 16 verbleiben.

Durch die zusätzliche Anordnung von Bürstenelementen 12 am mit Mäh- und/oder Vertikutiermessern 32 bestückten Halterungsrohr 16 des Rotationskörpers 3 wird ein exaktes Aufsammeln des gemähten bzw. aus dem Rasen herausvertikutierten Gutes in exakter Weise gewährleistet.

**Patentansprüche**

1. Gerät für das Kehren von Flächen mit einem verfahrenbaren Rahmen, an welchem ein Prallblech, ein Auffangbehälter und zwischen diesem eine rotierend gelagerte Kehrbürste, bestehend aus einem Halterungsrohr für die Bürstenelemente und besagten Bürstenelementen, angeordnet sind, welche letztere zusammen mit dem Prallblech einen Kehrgutförderkanal einschließt, dadurch gekennzeichnet, daß das Halterungsrohr (16) einen unrunden Querschnitt aufweist, wobei am Umfang des Halterungsrohres (16) in Umfangsrichtung des Halterungsrohres gesehen Halterungen (30) für die Bürstenelemente (12) mit unterschiedlichen radialen Abständen zur Rotationsachse (29) der Kehrbürste angebracht sind.

2. Gerät nach Anspruch 1, dadurch gekennzeichnet, daß das Halterungsrohr (16) einen ovalen Querschnitt aufweist.

3. Gerät nach Anspruch 1, dadurch gekennzeichnet, daß das Halterungsrohr (16) einen mehreckigen Querschnitt aufweist, der einem zusammengedrückten Vieleck ähnelt.

4. Gerät nach Anspruch 1 und/oder 3, dadurch gekennzeichnet, daß ein im Querschnitt mehrreihiger, vorzugsweise achteckiges Halterungsrohr (16) vorgesehen ist, welches im Querschnitt symmetrisch ist.

5. Gerät nach einem oder mehreren der vorstehenden Ansprüche, dadurch gekennzeichnet, daß das Halterungsrohr (16) im Querschnitt achteckig sowie einer Ellipse angenähert, jedoch mit geraden Flächen, ausgebildet ist.

6. Gerät nach Anspruch 1 und/oder 4, dadurch gekennzeichnet, daß jeweils an zwei gegenüberliegenden Seiten des Halterungsrohres (16) die Bürstenelemente (12) auf dem Halterungsrohr (16) mittels Halterungen (30) angebracht sind.

7. Gerät nach einem oder mehreren der vorstehenden Ansprüche, dadurch gekennzeichnet, daß auf den am weitesten von der Rotationsachse (29) entfernten Flächen (31) des Halterungsrohres (16) jeweils zwei Halterungen (30) in Umfangsrichtung gesehen nebeneinander angeordnet sind.

8. Gerät nach einem oder mehreren der vorstehenden Ansprüche, dadurch gekennzeichnet, daß die Bürstenelemente (12) gegen Messerelemente (32) austauschbar sind.

9. Gerät nach Anspruch 8, dadurch gekennzeichnet, daß an der Rotationstrommel (3, 16) jeweils für die Messer (32) und für die Bürstenelemente (12) eigene Halterungen (30) angebracht sind.

10. Gerät nach Anspruch 9, dadurch gekennzeichnet, daß die Messer (32) mit Zwischengliedern (35) an den an der Rotationstrommel (3, 16) angebrachten Halterungen (30) befestigt sind, und daß diese Zwischenglieder (35) an der Rotationstrommel (3, 16) verbleiben, wenn die Bürstenelemente (12) an der Rotationstrommel (3, 16) angeordnet sind.

**Claims**

1. Apparatus for sweeping surfaces, having a transportable frame on which there are disposed a baffle plate, a collector box, and therebetween a rotatably-mounted sweeping brushcomprising a mounting tube for retaining the brush members, and said brush members, the latter together with the baffle plate enclosing a conveyor channel for converying swept material, characterised in that the mounting tube (16) has a non-circular cross-section, mounting means (30) for the brush members (12) being mounted on the circumference of the mounting tube (16), when viewed with respect to the circumferential direction of said mounting tube, at various radial intervals relative to the rotary axis (29) of the sweeping brush.

2. Apparatus according to claim 1, characterised in that the mounting tube (16) has an oval cross-section.

3. Apparatus according to claim 1, characterised in that the mounting tube (16) has a polygonal cross-section similar to that of a compressed polygon.

4. Apparatus according to claim 1 and/or 3, characterised in that there is provided a mounting tube (16) which has a multiple row cross-section, preferably octagonal, said mounting tube (16) being symmetrical in cross-section.

5. Apparatus according to one or more of the preceding claims, characterised in that the mounting tube (16) is octagonal in cross-section and also resembles an ellipse, but with straight surfaces.

6. Apparatus according to claim 1 and/or 4, characterised in that the brush members (12) are mounted on the mounting tube (16) by means of mounting means (30), on each of two opposed sides of the mounting tube (16).

7. Apparatus according to one or more of the preceding claims, characterised in that two mountings (30) in each case, when viewed with respect to the circumferential direction, are disposed next to one another on the surfaces (31) of the mounting tube (16) furthest away from the rotary axis (29).

8. Apparatus according to one or more of the preceding claims, characterised in that the brush members (12) are exchangeable for cutter members (32).

9. Apparatus according to claim 8, characterised in that specific mounting means (30) are attached on the rotary drum (3, 16) specifically for the cutters (32) and for the brush members (12).

10. Apparatus according to claim 9, characterised in that the cutters (32) are secured by intermediate members (35) on the mounting means (30) attached to the rotary drum (3, 16), and in that these intermediate members (35) remain on the rotary drum (3, 16) when the brush members (12) are disposed on the rotary drum (3, 16).


## Revendications

1. Appareil pour balayer les surfaces, comportant un châssis de roulement portant une tôle de renvoi, un bac de réception et des brosses ou balais montés en rotation formés d'un tube de fixation pour des éléments de brosse ou de balai, ces derniers délimitant avec la tôle de renvoi, un canal de transfert des produits de balayage, appareil caractérisé en ce que le tube de fixation (16) présente une section non circulaire et la périphérie du tube de fixation (16) comporte dans la direction périphérique du tube, des fixations (30) pour les éléments de brosse ou de balai (12) à des distances radiales différentes par rapport à l'axe de rotation (29) du balai.

2. Appareil selon la revendication 1, caractérisé en ce que le tube de fixation (16) présente une section ovale.

3. Appareil selon la revendication 1, caractérisé en ce que le tube de fixation (16) présente une section polygonale analogue à un polygone écrasé.

4. Appareil selon la revendication 1 et/ou 3, caractérisé par un tube de fixation (16) à section polygonale de préférence octogonale à section symétrique.

5. Appareil selon l'une ou plusieurs des revendications précédentes, caractérisé en ce que le tube de fixation (16) présente une section octogonale voisine d'une ellipse, mais avec des à-plats.

6. Appareil selon la revendication 1 et/ou 4, caractérisé en ce que sur chaque face opposée du tube de fixation (16), les éléments de brosse ou de balai (12) sont prévus sur le tube de fixation (16) à l'aide d'un moyen de fixation (30).

7. Appareil selon l'une ou plusieurs des revendications précédentes, caractérisé en ce que sur les surfaces (31) du tube de fixation (16) les plus éloignées de l'axe de rotation (29), on a, à chaque fois deux fixations (30) disposées l'une derrière l'autre dans la direction périphérique.

8. Appareil selon l'une ou plusieurs de revendications précédentes, caractérisé en ce que les éléments de brosse ou de balai (12) peuvent être remplacés par des éléments de couteau (32).

9. Appareil selon la revendication 8, caractérisé en ce que le tambour de rotation (3, 16) comporte des fixations (30), pour les couteaux (32) et pour les éléments de brosse ou de balai (12).

10. Appareil selon la revendication 9, caractérisé en ce que les couteaux (32) sont fixés aux fixations (30) portées par le tambour de rotation (3, 16) par des organes intermédiaires (35) et ces derniers restent sur le tambour de rotation (3, 16) lorsque les éléments de brosse ou de balai (12) équipent le tambour de rotation (3, 16).

FIG. 1

EP 0 368 021 B1

FIG. 2

FIG. 3

FIG. 4

FIG. 5

FIG. 6

EP 0 368 021 B1

FIG. 7

FIG. 8

EP 0 368 021 B1

FIG. 9

FIG. 10

FIG. 11